(19) Europäisches Patentamt / European Patent Office / Office européen des brevets

(11) **EP 3 068 162 B1**

(12) **EUROPEAN PATENT SPECIFICATION**

(45) Date of publication and mention
of the grant of the patent:
**07.04.2021 Bulletin 2021/14**

(21) Application number: **13897603.0**

(22) Date of filing: **13.11.2013**

(51) Int Cl.:
**H04W 24/02** *(2009.01)*    **H04W 28/08** *(2009.01)*

(86) International application number:
**PCT/CN2013/087016**

(87) International publication number:
**WO 2015/070388 (21.05.2015 Gazette 2015/20)**

(54) **NETWORK SERVICE HOTSPOT ELIMINATION BASE STATION, COORDINATOR AND METHOD THEREOF**

BASISSTATION ZUR ENTFERNUNG VON NETZWERKDIENST-HOTSPOTS, KOORDINATOR UND VERFAHREN DAFÜR

STATION DE BASE POUR L'ÉLIMINATION DE POINTS CHAUDS D'UN SERVICE DE RÉSEAU, COORDINATEUR ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.09.2016 Bulletin 2016/37**

(73) Proprietor: **Huawei Technologies Co., Ltd.
Longgang District
Shenzhen, Guangdong 518129 (CN)**

(72) Inventors:
• **ZHANG, Jietao
Shenzhen City
Guangdong 518129 (CN)**
• **SUN, Chunhua
Shenzhen City
Guangdong 518129 (CN)**
• **ZHUANG, Hongcheng
Shenzhen City
Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 1 184 938          WO-A1-2013/113266
CN-A- 101 384 073        CN-A- 101 415 207
CN-A- 101 895 934        US-A1- 2011 294 499
US-A1- 2013 235 807

**Description**

**TECHNICAL FIELD**

The present invention relates to the field of network communications, and in particular, to a base station, and a method for eliminating a network traffic hotspot.

**BACKGROUND**

With rapid popularization of intelligent terminals and diversification of wireless broadband services, traffic carried by a cellular network increases rapidly. In an existing network, resources in some regions are wasted due to a small volume of temporary traffic, and resources in other regions are insufficient due to a large volume of temporary traffic. In this case, network resources cannot be fully utilized according to service requirements, thereby deteriorating user experience.

In the prior art, a self-organizing network (Self-Organizing Network, SON) technology is used for load balancing in a network. A cell-edge user of a highly loaded sector is handed over to a lowly loaded sector neighboring to the highly loaded sector by adjusting a parameter for handover between the highly loaded sector and the lowly loaded sector, thereby avoiding overload of the highly loaded sector. However, the single SON optimization cannot be applied to various types of sector overload. For example, if sector overload is caused by a user in the sector instead of a cell-edge user of the sector, effectiveness of load balancing decreases.

According to US 2011/0294499 A1, localized areas within a cell of a cellular wireless communication network, wherein users experience high traffic loads or poor coverage, are automatically detected and positioned by a network-based monitoring and positioning method.

WO 2013/113266 A1 provides a self organizing network (SON) coordination method. The method includes: obtaining a coordination parameter of a self organizing network function; and coordinating running of the self-organizing network function according to the coordination parameter.

**SUMMARY**

In view of the above, the present invention provides a base station according to claim 1, and a method for eliminating a network traffic network traffic hotspot according to claim 2, to solve the problem that single SON optimization cannot be applied to various types of sector overload.

In a first aspect, a base station is provided, which includes a processing unit and a transmitting unit, where the processing unit obtains a network traffic hotspot of each sector of the base station based on a network traffic volume of the sector; and if there is no network traffic hotspot in the sector, the transmitting unit reports to a coordinator that there is no network traffic hotspot; or if there is a network traffic hotspot in the sector, the processing unit obtains a traffic volume and a location of a virtual network traffic hotspot based on locations of all network traffic hotspots in the sector according to the following relationship:

$$(x_{sc}, \; y_{sc}) = \frac{\sum\limits_{si=1}^{C_N} T_{si} * (x_{si}, \; y_{si})}{\sum\limits_{si=1}^{C_N} T_{si}}$$

where the sector (107) comprises $C_N$ network traffic hotspots, a location of each of the network traffic hotspots is $(x_{si}, y_{si})$, a traffic volume corresponding to each of the network traffic hotspots is $T_{si}$, the location of the virtual network traffic hotspot corresponding to the $C_N$ network traffic hotspots is $(x_{sc}, y_{sc})$, and the traffic volume of the virtual network traffic hotspot is $\sum\limits_{si=1}^{C_N} T_{si}$, the transmitting unit reports to a coordinator in an apparatus for eliminating a network traffic hotspot, that there is no network traffic hotspot if there is no network traffic hotspot in the sector; and reports the traffic volume and the location of the virtual network traffic hotspot to the coordinator if there is a network traffic hotspot in the sector.

In a second aspect, a method performed by a base station for eliminating a network traffic hotspot is provided, where the method includes: obtaining a network traffic hotspot of each sector of the base station based on a network traffic volume of the sector; if there is no network traffic hotspot in the sector, reporting to a coordinator that there is no network traffic hotspot; if there is a network traffic hotspot in the sector, obtaining a traffic volume and a location of a virtual network traffic hotspot based on locations of all network traffic hotspots in the sector according to the following relationship:

$$(x_{sc}, \; y_{sc}) = \frac{\sum\limits_{si=1}^{C_N} T_{si} * (x_{si}, \; y_{si})}{\sum\limits_{si=1}^{C_N} T_{si}}$$

wherein the sector (107) comprises $C_N$ network traffic hotspots, a location of each of the network traffic hotspots is $(x_{si}, y_{si})$, a traffic volume corresponding to each of the network traffic hotspots is $T_{si}$, the location of the virtual network traffic hotspot corresponding to the $C_N$ network traffic hotspots is $(x_{sc}, y_{sc})$, and the traffic volume of the virtual network traffic hotspot is $\sum_{si=1}^{C_N} T_{si}$ ; and reporting the traffic volume and the location of the virtual network traffic hotspot to the coordinator.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic structural diagram of an apparatus for eliminating a network traffic hotspot according to a first embodiment which is not according to the invention and is present for illustration purposes only;

FIG. 2 is a schematic diagram of a sector of a base station as shown in FIG. 1;

FIG. 3 is a schematic structural diagram of an apparatus for eliminating a network traffic hotspot according to a third embodiment which is not according to the invention and is present for illustration purposes only;

FIG. 4 is a schematic diagram of locations of network traffic hotspot regions in sectors as shown in FIG. 3;

FIG. 5 is a schematic block diagram of an apparatus for eliminating a network traffic hotspot according to a fourth embodiment which is not according to the invention and is present for illustration purposes only;

FIG. 6 is a schematic diagram of a sector of a base station as shown in FIG. 5;

FIG. 7 is a flowchart of a method for eliminating a network traffic hotspot according to a first embodiment of the present invention;

FIG. 8 is a flowchart of a method for eliminating a network traffic hotspot according to a second embodiment which is not according to the invention and is present for illustration purposes only;

FIG. 9 is a flowchart of a method for eliminating a network traffic hotspot according to a third embodiment of the present invention;

FIG. 10 is a flowchart of performing first configuration optimization on a network by a coordinator as shown in FIG. 9;

FIG. 11 is a flowchart of performing second configuration optimization on a network by a coordinator as shown in FIG. 9;

FIG. 12 is a flowchart of performing third configuration optimization on a network by a coordinator as shown in FIG. 9;

FIG. 13 is a flowchart of performing fourth configuration optimization on a network by a coordinator as shown in FIG. 9; and

FIG. 14 is a flowchart of performing fifth configuration optimization on a network by a coordinator as shown in FIG. 9.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

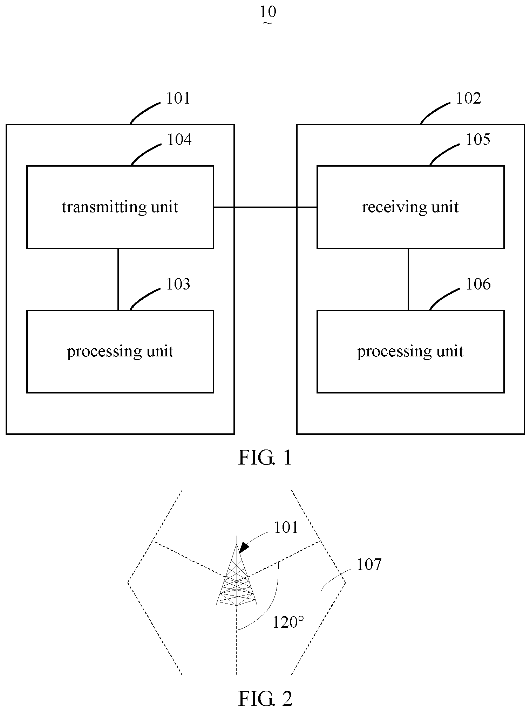

With reference to FIG. 1, FIG. 1 is a structural block diagram of an apparatus for eliminating a network traffic hotspot according to a first embodiment which is not according to the invention and is present for illustration purposes only. As shown in FIG. 1, an apparatus 10 for eliminating a network traffic hotspot according to this embodiment includes: a base station 101 and a coordinator (eCoordinator) 102. The base station 101 includes a processing unit 103 and a transmitting unit 104. The coordinator 102 includes a receiving unit 105 and a processing unit 106.

As shown in FIG. 2, the base station 101 according to this embodiment includes three sectors 107. Each of the sectors 107 covers a range of 120 degrees. The processing unit 103 of the base station 101 obtains a network traffic hotspot of each sector 107 of the base station based on a network traffic volume of the sector 107, and determines whether there is a network traffic hotspot in the sector 107. The processing unit 103 of the base station 101 determines whether there is a network traffic hotspot in the sector 107 by means of a key performance indicator (Key Performance Indicator, KPI) and traffic measurement data, or determines whether there is a network traffic hotspot in the sector 107 by performing an assumption. If there is no network traffic hotspot in the sector 107, the transmitting unit 104 of the base station 101 reports to the receiving unit 105 of the coordinator 102 that there is no network traffic hotspot. If there is a network traffic hotspot in the sector 107, the processing unit 103 of the base station 101 obtains a traffic volume and a location of a virtual network traffic hotspot based on locations of all network traffic hotspots in the sector 107. The transmitting unit 104 of the base station 101 reports the traffic volume and the location of the virtual network traffic hotspot to the receiving unit 105 of the coordinator 102. The processing unit 106 of the coordinator 102 obtains the traffic volume and the location of the virtual network traffic hotspot from the receiving unit 105 of the coordinator 102, and performs network configuration optimization based on the traffic volume, the location and the temporal characteristics of the virtual network traffic hotspot. This solution can be applied to various types of overload of the sector 107, thereby avoiding overload of the sector 107 and eliminating a network traffic hotspot.

In another embodiment which is not according to the invention and is present for illustration purposes only, the coordinator 102 can be provided in the base station 101 by those skilled in the art. Preferably, the network according to this embodiment is a cellular network.

An apparatus for eliminating a network traffic hotspot is further provided according to a second embodiment of the present invention, and is described in detail on the basis of the apparatus 10 for eliminating the network traffic hotspot according to the first embodiment. That the processing unit 103 of the base station 101 obtains the network traffic hotspot of each sector 107 of the base station based on network traffic of the sector 107 includes that: the processing unit 103 of the base station 101 obtains the network traffic hotspot of the sector 107 by means of KPI detection, minimum drive test (Minimum Drive Test, MDT) and traffic measurement data; or the processing unit 103 of the base station 101 assumes the network traffic hotspot of the sector 107 by means of the MDT and the traffic measurement data with a method such as wavelet transform and timing analysis. For example, the processing unit 103 performs wavelet transform on the traffic measurement data to obtain wavelet components corresponding to traffic measurement data on different time scales, and then performs a timing analysis on the different wavelet components to predict traffic growth of different time scales. The traffic measurement data collects statistics on various indicators such as network call, call drop and traffic volume, which is an important means to learn the network performance.

The locations of all the network traffic hotspots in the sector 107, the traffic volume of the virtual network traffic hotspot and the location of the virtual network traffic hotspot meet a relationship as follows:

$$(x_{sc}, \ y_{sc}) = \frac{\sum\limits_{si=1}^{C_N} T_{si} * (x_{si}, \ y_{si})}{\sum\limits_{si=1}^{C_N} T_{si}} \qquad (1),$$

where the sector 107 includes $C_N$ network traffic hotspots, a location of each of the network traffic hotspots is $(x_{si}, y_{si})$, a traffic volume corresponding to the network traffic hotspot is $T_{si}$, the location of the virtual network traffic hotspot corresponding to the $C_N$ network traffic hotspots is $(x_{sc}, y_{sc})$, and the traffic volume of the virtual network traffic hotspot is $\sum\limits_{si=1}^{C_N} T_{si}$. That is, the processing unit 103 of the base station 101 obtains the traffic volume and the location of the virtual network traffic hotspot according to the locations of all the network traffic hotspots in the sector 107 and the formula (1). In another embodiment, which is not according to the invention and is present for illustration purposes only, those skilled in the art may further obtain the location of the virtual network traffic hotspot in other manners. For example, the processing unit 103 acquires the location $(x_{sc}, y_{sc})$ of the virtual network traffic hotspot by optimizing an equation as follows:

$$\min \left( \frac{T_{si} * |(x_{si}, \ y_{si}) - (x_{sc}, \ y_{sc})|^2}{\sum\limits_{si=1}^{C_N} T_{si}} \right).$$

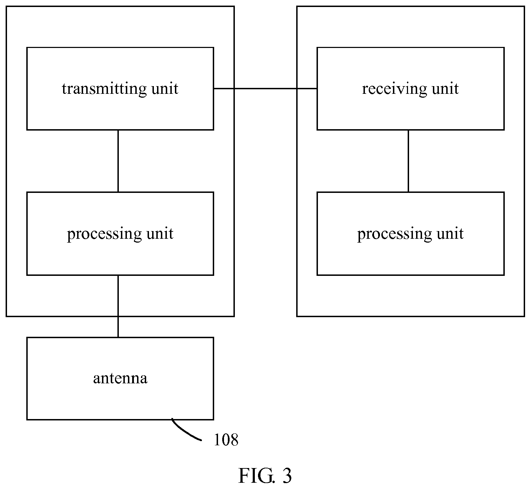

An apparatus for eliminating a network traffic hotspot is further provided according to a third embodiment which is not according to the invention and is present for illustration purposes only, and which is described in detail on the basis of the apparatus 10 for eliminating the network traffic hotspot according to the first embodiment. The apparatus for eliminating the network traffic hotspot according to this embodiment further includes an antenna 108, as shown in FIG. 3. Firstly, the processing unit 106 of the coordinator 102 determines network traffic hotspot regions based on the traffic volume and the location of the virtual network traffic hotspot and sorts the network traffic hotspot regions according to traffic volumes of all hotspot regions. Then, the processing unit 106 of the coordinator 102 traverses the network traffic hotspot regions in a descending order of the traffic volumes and determines whether traversing of the network traffic hotspot regions has been completed. The processing unit 106 of the coordinator 102 performs network configuration optimization based on locations and temporal characteristics of the network traffic hotspot regions if traversing of the network traffic hotspot regions has not been completed. After performing the network configuration optimization, the processing unit 106 of the coordinator 102 acquires a KPI of the network after the optimization and a KPI of the network before the optimization, and compares the KPI of the network after the optimization with the KPI of the network before the optimization. The processing unit 106 of the coordinator 102 sets a parameter of the network after the optimization back to that before the optimization if the KPI of the network after the optimization is worse than the KPI of the network before the optimization. The KPI of the network after the optimization being worse than the KPI of the network before the optimization may be the KPI of the network after the optimization being less than the KPI of the network before the optimization, or the KPI of the network after the optimization being greater than the KPI of the network before the optimization. For example, if a throughput of the network after the optimization is less than a throughput of the network before the optimization or if a call drop rate of the network after the optimization is greater than a call drop rate of a network before the optimization, it is considered that the KPI of the network after the optimization is worse than the KPI of the network before the optimization.

The processing unit 106 of the coordinator 102 determines the network traffic hotspot regions of the network based on the traffic volume and the location of the virtual network traffic hotspot according to a formula as follows:

$$(x_{vc}, \ y_{vc}) = \frac{\sum\limits_{vi=1}^{V_M} T_{vi} * (x_{vi}, \ y_{vi})}{\sum\limits_{vi=1}^{V_M} T_{vi}} \qquad (2),$$

where a quantity of neighboring virtual network traffic hotspots in multiple neighboring sectors 107 is $V_M$, a location of the virtual network traffic hotspot is $(x_{vi}, y_{vi})$, a location of a network traffic hotspot region is $(x_{vc}, y_{vc})$, the traffic volume of the virtual network traffic hotspot is

$$T_{vi} = \sum\limits_{si=1}^{C_N} T_{si} ,$$ and a traffic volume of the network traffic hotspot region is $\sum\limits_{vi=1}^{V_M} T_{vi} .$

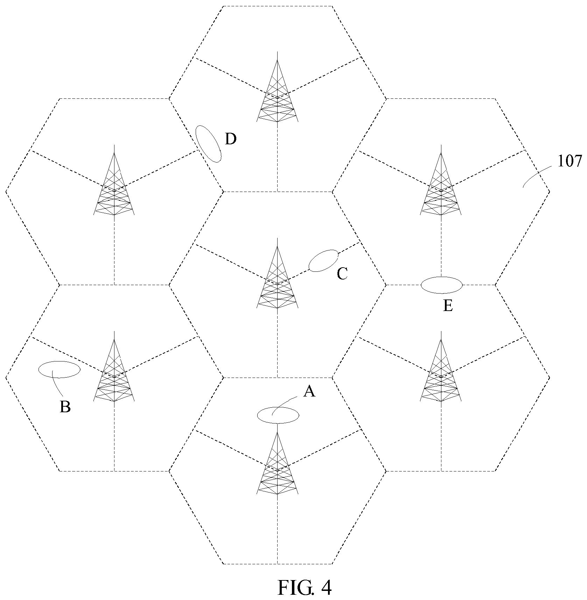

In this embodiment, the processing unit 106 of the coordinator 102 sorts the network traffic hotspot regions based on the traffic volumes of all network traffic hotspot regions, and traverses the network traffic hotspot regions in a descending order of the traffic volumes of all network traffic hotspot regions. That the processing unit 106 of the coordinator 102 performs the network configuration optimization based on the locations and the temporal characteristics of the network traffic hotspot regions includes: The processing unit 106 of the coordinator 102 determines whether a network traffic hotspot region is located inside a sector 107, and performs first configuration optimization of the network based on the temporal characteristics of the network traffic hotspot region if the network traffic hotspot region is located inside the sector 107. If the network traffic hotspot region is not located inside the sector 107, the processing unit 106 of the coordinator 102 determines whether the network traffic hotspot region is located at an edge of a neighboring sector 107, and performs second configuration optimization of the network based on the temporal characteristics of the network traffic hotspot region if the network traffic hotspot region is located at the edge of the neighboring sector 107. If the network traffic hotspot region is not located at the edge of the neighboring sector 107, the processing unit 106 of the coordinator 102 determines whether the network traffic hotspot region is located at an intersection area of neighboring sectors 107, and performs third configuration optimization of the network based on the temporal characteristics of the network traffic hotspot region if the network traffic hotspot region is located at the intersection area of the neighboring sectors 107. If the network traffic hotspot region is not located at the intersection area of the neighboring sectors 107, the processing unit 106 of the coordinator 102 determines whether the network traffic hotspot region is located at an edge of coverage of the sector 107, and performs fourth configuration optimization of the network based on the temporal characteristics of the network traffic hotspot region if the network traffic hotspot region is located at the edge of coverage of the sector 107. If the network traffic hotspot region is not located at the edge of coverage of the sector 107, the processing unit 106 of the coordinator 102 determines whether the network traffic hotspot region is located at an intersection area of coverage of the sectors 107, and performs fifth configuration optimization of the network based on the temporal characteristics of the network traffic hotspot region if the network traffic hotspot region is located at the intersection area of coverage of the sectors 107. FIG. 4 shows locations of network traffic hotspot regions in the sectors 107. A network traffic hotspot region A is located inside a sector 107, that is, the network traffic hotspot region A is located in a center region of the sector 107. A network traffic hotspot region B is located at an edge of a neighboring sector 107, that is, the network traffic hotspot region B is located inside an edge region of the sector 107, and is close to an neighboring sector 107 of the same base station 101, but is not located in an overlapping coverage region of the two sectors. A network traffic hotspot region C is located at an intersection area of neighboring sectors 107, that is, the network traffic hotspot region C is located in the overlapping coverage region of two neighboring sectors 107 of the same base station 101. A network traffic hotspot region D is located at an edge of coverage of a sector 107, that is, the network traffic hotspot region D is located in an edge region of a sector, and is close to one or more neighboring sectors 107 of another base station 101, but is not located in the overlapping coverage region of the above sectors 107. A network traffic hotspot region E is located at an intersection area of coverage of sectors 107, that is, the network traffic hotspot region F is located in the overlapping coverage region of two or more neighboring sectors 107 of different base stations 101.

That the processing unit 106 of the coordinator 102 performs the first configuration optimization of the network based on the temporal characteristics of the network traffic hotspot region includes: The processing unit 106 of the coordinator 102 determines whether the network traffic hotspot region is a long-term network traffic hotspot or a short-term network traffic hotspot; and if the network traffic hotspot region is a long-term network traffic hotspot, the processing unit 106 of the coordinator 102 prompts a user to insert a new base station in the network traffic hotspot region; or if the network traffic hotspot region is a short-term network traffic hotspot, the processing unit 106 of the coordinator 102 determines whether short-term network configuration optimization has been performed for the network traffic hotspot region, and if the short-term network configuration optimization has not been performed for the network traffic hotspot region, the processing unit 106 of the coordinator 102 performs capacity and coverage optimization (Capacity and Coverage Optimization, CCO) by invoking a pilot frequency of the sector 107 and a downtilt of the antenna 108. The long-term network traffic hotspot refers to that the network traffic hotspot region is always detected in a long statistical time period, such as in a weekly or monthly statistical time period. The short-term network traffic hotspot refers to that the network traffic hotspot region is detected in a short statistical time period, such as in a minutely or hourly statistical time period.

That the processing unit 106 of the coordinator 102 performs the second configuration optimization of the network based on the temporal characteristics of the network traffic hotspot region includes: the processing unit 106 of the coordinator 102 determines whether the network traffic hotspot region is a long-term network traffic hotspot or a short-term network traffic hotspot; and if the network traffic hotspot region is a long-term network traffic hotspot, the processing unit 106 of the coordinator 102 determines whether long-term network configuration optimization has been performed for the network traffic hotspot region, and if the long-term network configuration optimization has not been performed for the network traffic hotspot region, the processing unit 106 of the coordinator 102 jointly optimizes a downtilt of the antenna 108 and an azimuth of the antenna 108 to steer a main lobe of the antenna 108 towards the network traffic hotspot region; or if the network traffic hotspot region is a short-term network traffic hotspot, the processing unit 106 of the coordinator 102 determines whether short-term network configuration optimization has been performed for the network traffic hotspot region, and if the short-term network configuration optimization has not been performed for the network traffic hotspot region, the processing unit 106 of the coordinator 102 adjusts, by invoking mobility load balancing (Mobility Load Balancing, MLB), a parameter for handover between neighboring sectors 107 of the base station 101 to perform load balancing.

That the processing unit 106 of the coordinator 102 performs the third configuration optimization of the network based on the temporal characteristics of the network traffic hotspot region includes: The processing unit 106 of the coordinator 102 determines whether the network traffic hotspot region is a long-term network traffic hotspot or a short-term network traffic hotspot; and if the network traffic hotspot region is a long-term network traffic hotspot, the processing unit 106 of the coordinator 102 determines whether long-term network configuration optimization is performed for the network traffic hotspot region, and if the long-term network configuration optimization has not been performed for the network traffic hotspot region, the processing unit 106 of the coordinator 102 jointly optimizes a downtilt of the antenna 108 and an azimuth of the antenna 108 to steer a main lobe of the antenna 108 towards the network traffic hotspot region; or if the network traffic hotspot region is a short-term network traffic hotspot, the processing unit 106 of the coordinator 102 determines whether short-term network configuration optimization has been performed for the network traffic hotspot region, and if the short-term network configuration optimization has not been performed for the network traffic hotspot region, the processing unit 106 of the coordinator 102 schedules, by using the base station 101 where the network traffic hotspot region is located, an inner base station coordinated multipoint transmission (Coordinated Multi-Point Transmission, COMP) processing between two sectors 107 where the network traffic hotspot region is located.

That the processing unit 106 of the coordinator 102 performs the fourth configuration optimization of the network based on the temporal characteristics of the network traffic hotspot region includes: The processing unit 106 of the coordinator 102 determines whether the network traffic hotspot region is a long-term network traffic hotspot or a short-term network traffic hotspot; and if the network traffic hotspot region is a long-term network traffic hotspot, the processing unit 106 of the coordinator 102 prompts a user to insert a new base station in the network traffic hotspot region; or if the network traffic hotspot region is a short-term network traffic hotspot, the processing unit 106 of the coordinator 102 determines whether short-term network configuration optimization has been performed for the network traffic hotspot region, and if the short network configuration optimization has not been performed for the network traffic hotspot region, the processing unit 106 of the coordinator 102 adjusts, by invoking an MLB case, a parameter for handover between at least two neighboring sectors of multiple base stations 101 to perform load balancing.

That the processing unit 106 of the coordinator 102 performs the fifth configuration optimization of the network based on the temporal characteristics of the network traffic hotspot region includes: the processing unit 106 of the coordinator 102 determines whether the network traffic hotspot region is a long-term network traffic hotspot or a short-term network traffic hotspot; and if the network traffic hotspot region is a long-term network traffic hotspot, the processing unit 106 of the coordinator 102 determines whether long-term network configuration optimization has been performed for the network traffic hotspot region, and if the long-term network configuration optimization has not been performed for the network traffic hotspot region, the processing unit 106 of the coordinator 102 prompts a user to insert a new base station in the network traffic hotspot region; or if the network traffic hotspot region is a short-term network traffic hotspot, the processing unit 106 of the coordinator 102 determines whether short-term network configuration optimization has performed for the network traffic hotspot region, and if the short-term network configuration optimization has not been performed for the network traffic hotspot region, the processing unit 106 of the coordinator 102 schedules, by using multiple base stations 101 where the network traffic hotspot region is located, an inter-base station COMP processing between at least two sectors where the network traffic hotspot region is located.

The present invention is different from the prior art in that, the apparatus for eliminating the network traffic hotspot according to this embodiment can be applied to various types of overload of the sector 107 by providing the base station 101 and the coordinator 102, thereby avoiding overload of the sector 107.

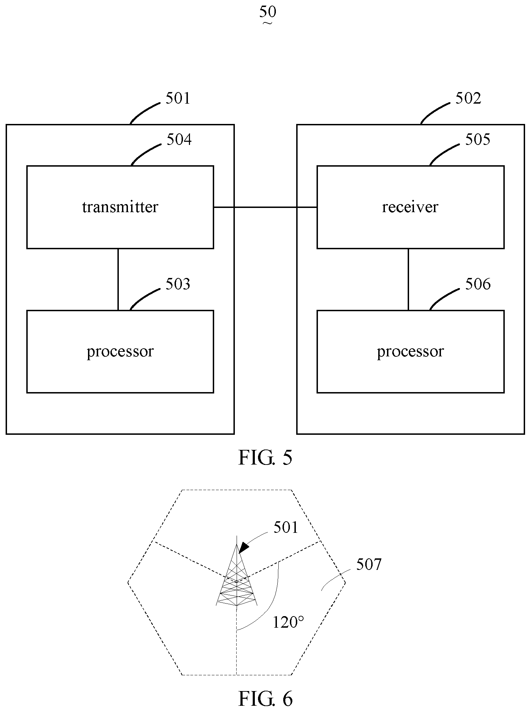

With reference to FIG. 5, FIG. 5 is a schematic block diagram of an apparatus for eliminating a network traffic hotspot according to a fourth embodiment which is not according to the invention and is present for illustration purposes only. As shown in FIG. 5, an apparatus 50 for eliminating a network traffic hotspot according to the embodiment includes: a base station 501 and a coordinator (eCoordinator) 502. The base station 501 includes a processor 503 and a transmitter 504. The coordinator 502 includes a receiver 505 and a processor 506.

As shown in FIG. 6, the base station 501 according to this embodiment includes three sectors 507. Each of the sectors 507 covers a range of 120 degrees. The processor 503 of the base station 501 obtains a network traffic hotspot of each sector 507 of the base station based on a network traffic volume of the sector 507, and determines whether there is a network traffic hotspot in the sector 507. The processor 503 of base station 501 determines whether there is a network traffic hotspot in the sector 507 by means of a KPI and traffic measurement data or determines whether there is a network traffic hotspot in the sector 507 by performing a assumption. If there is no network traffic hotspot in the sector, the transmitter 504 of the base station 501 reports to the receiver 505 of the coordinator 502 that there is no network traffic hotspot. If there is a network traffic hotspot in the sector 507, the processor 503 of the base station 501 obtains a traffic volume and a location of a virtual network traffic hotspot based on locations of all network traffic hotspots in the sector 507. The transmitter 504 of the base station 501 reports the traffic volume and the location of the virtual network traffic hotspot to the receiver 505 of the coordinator 502. The processor 506 of the coordinator 502 obtains the traffic and the location of the virtual network traffic hotspot from the receiver 505 of the coordinator 502 and performs network configuration optimization based on the traffic volume, the location and temporal characteristics of the virtual network traffic hotspot. This solution can be applied to various overload of the sector 507, thereby avoiding overload of the sector 507.

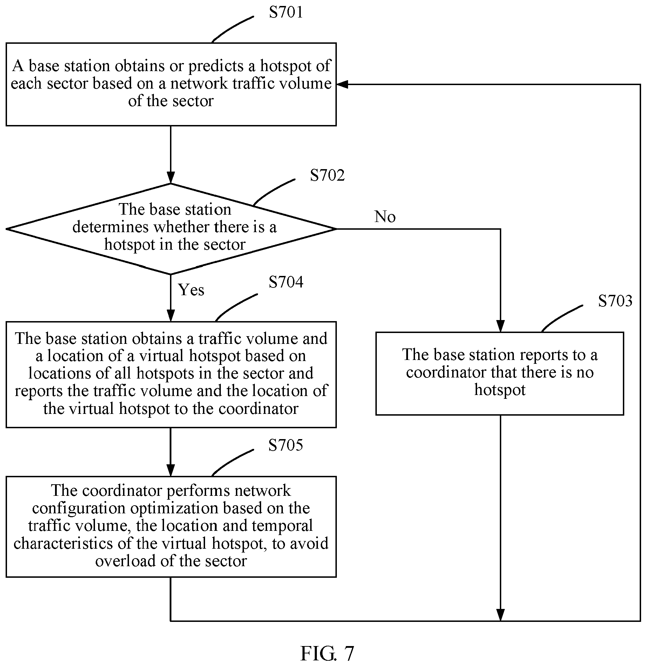

A method for eliminating a network traffic hotspot is further provided according to an embodiment of the present invention, which is described in detail on the basis of the apparatus 10 for eliminating the network traffic hotspot according to the first embodiment. As shown in FIG. 7, the method according to this embodiment includes:

S701: The base station 101 obtains a network traffic hotspot of each sector 107 of the base station based on a network traffic volume of the sector 107.
S702: The base station 101 determines whether there is a network traffic hotspot in the sector 107.
S703: If there is no network traffic hotspot in the sector 107, the base station 101 reports to the coordinator 102 that there is no network traffic hotspot.
S704: If there is a network traffic hotspot in the sector 107, the base station 101 obtains a traffic volume and a location of a virtual network traffic hotspot based on locations of all network traffic hotspots in the sector 107, and reports the traffic volume and the location of the virtual network traffic hotspot to the coordinator 102.
S705: The coordinator 102 performs network configuration optimization based on the traffic volume, the location and temporal characteristics of the virtual network traffic hotspot, to avoid overload of the sector 107.

In S701, the base station 101 obtains the network traffic hotspot of the sector 107 by means of a KPI detection, MDT and traffic measurement data; or the base station 101 assumes the network traffic hotspot of the sector 107 by means of the MDT and the traffic measurement data with a method such as wavelet transform and timing analysis.

In S703, the base station 101 reports to the coordinator 102 that there is no network traffic hotspot, and then returns to S701.

In S704, the base station 101 obtains the traffic volume and the location of the virtual network traffic hotspot based on the locations of all the network traffic hotspots in the sector 107 according to formula (1).

In S705, the coordinator performs network configuration optimization based on the traffic volume and the location of the virtual network traffic hotspot, and then returns to S701.

In other embodiments of the present invention, the coordinator 102 may be provided in the base station 101 by those skilled in the art. Preferably, the network according to the present invention is a cellular network.

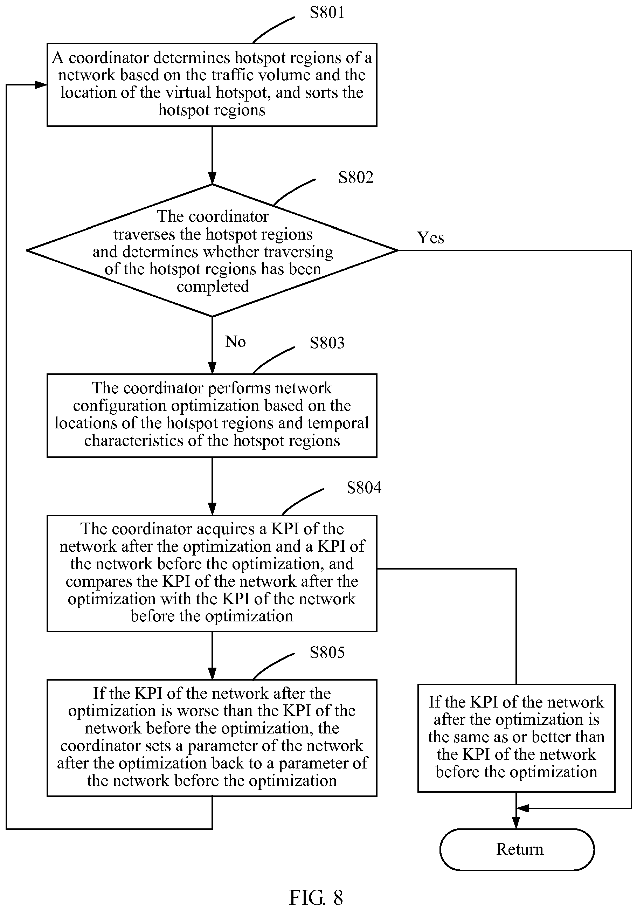

A method for eliminating a network traffic hotspot is provided according to a second embodiment of the present invention, which is described in detail on the basis of the method for eliminating the network traffic hotspot according to the first embodiment. As shown in FIG. 8, in S705, the performing, by the coordinator 102, the network configuration optimization based on the traffic, the location and the temporal characteristics of the virtual network traffic hotspot includes:

S801: The coordinator 102 determines network traffic hotspot regions of a network based on the traffic volume and the location of the virtual network traffic hotspot; and sorts the network traffic hotspot regions according to traffic volumes of all hotspot regions.

S802: The coordinator 102 traverses the network traffic hotspot regions in a descending order of the traffic volumes; and determines whether traversing of the network traffic hotspot regions has been completed.

S803: The coordinator 102 performs network configuration optimization based on locations of the network traffic hotspot regions and temporal characteristics of the network traffic hotspot regions if traversing of the network traffic hotspot regions has not been completed.

S804: The coordinator 102 acquires a KPI of the network after the optimization and a KPI of the network before the optimization, and compares the KPI of the network after the optimization with the KPI of the network before the optimization.

S805: The coordinator 102 sets a parameter of the network after the optimization back to that before the optimization if the KPI of the network after the optimization is worse than the KPI of the network before the optimization.

In S801, the coordinator 102 determines the network traffic hotspot regions of the network based on the traffic and the location of the virtual network traffic hotspot according to the formula (2). Then, the coordinator 102 sorts the network traffic hotspot regions according to traffic volumes of all network traffic hotspot regions.

In S802, the coordinator 102 traverses the network traffic hotspot regions in a descending order of the traffic volumes of the network traffic hotspot regions, and the process returns back if traversing of the network traffic hotspot regions has been completed.

In S804, if the KPI of the network after the optimization is the same as or better than the KPI of the network before the optimization, the process returns back.

In S805, the coordinator 102 sets a parameter of the network a parameter of the network after the optimization back to an original parameter of the network, and the process returns to S801 to process a next network traffic hotspot. Specifically, the KPI of the network after the optimization being worse than the KPI of the network before the optimization may be: the KPI of the network after the optimization being less than the KPI of the network before the optimization, or the KPI of the network after the optimization being greater than the KPI of the network before the optimization. For example, if a throughput of the network after the optimization is less than a throughput of the network before the optimization or if a call drop rate of the network after the optimization is greater than a call drop rate of the network before the optimization, it is considered that the KPI of the network after the optimization is worse than the KPI of the network before the optimization.

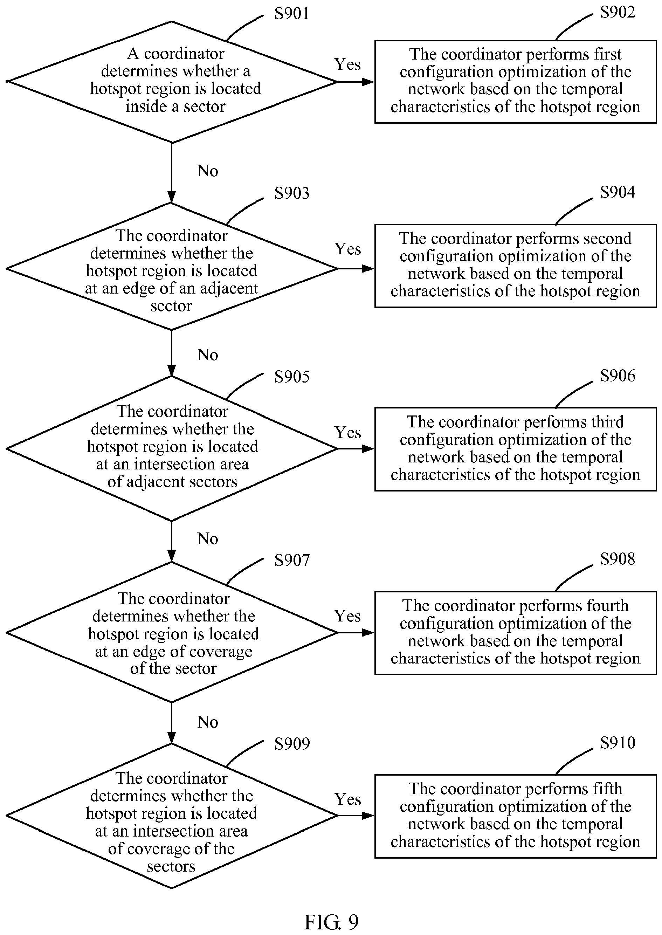

A method for eliminating a network traffic hotspot is further provided according a third embodiment of the present invention, which is described in detail on the basis of the method for eliminating the network traffic hotspot according to the second embodiment. As shown in FIG. 9, in S803, the performing, by the coordinator 102, the network configuration optimization based on the locations of the network traffic hotspot regions includes:

S901: The coordinator 102 determines whether the network traffic hotspot region is located inside a sector 107.

S902: The coordinator 102 performs first configuration optimization of the network based on the temporal characteristics of the network traffic hotspot region if the network traffic hotspot region is located inside the sector 107.

S903: The coordinator 102 determines whether the network traffic hotspot region is located at an edge of a neighboring sector 107 if the network traffic hotspot region is not located inside the sector 107.

S904: The coordinator 102 performs second configuration optimization of the network based on the temporal characteristics of the network traffic hotspot region if the network traffic hotspot region is located at the edge of the neighboring sectors 107.

S905: The coordinator 102 determines whether the network traffic hotspot region is located at an intersection area of the neighboring sectors 107 if the network traffic hotspot region is not located at the edge of the neighboring sectors 107.

S906: The coordinator 102 performs third configuration optimization of the network based on the temporal characteristics of the network traffic hotspot region if the network traffic hotspot region is located at the intersection area of the neighboring sectors 107.

S907: The coordinator 102 determines whether the network traffic hotspot region is located at an edge of coverage of the sector 107 if the network traffic hotspot region is not located at the intersection area of the neighboring sectors 107.

S908: The coordinator 102 performs fourth configuration optimization of the network based on the temporal characteristics of the network traffic hotspot region if the network traffic hotspot region is located at the edge of coverage of the sector 107.

S909: The coordinator 102 determines whether the network traffic hotspot region is located at an intersection area of coverage of the sectors 107 if the network traffic hotspot region is not located at the edge of coverage of the sector 107.

S910: The coordinator 102 performs fifth configuration optimization of the network based on the temporal characteristics of the network traffic hotspot region if the network traffic hotspot region is located at the intersection area of coverage of the sectors 107.

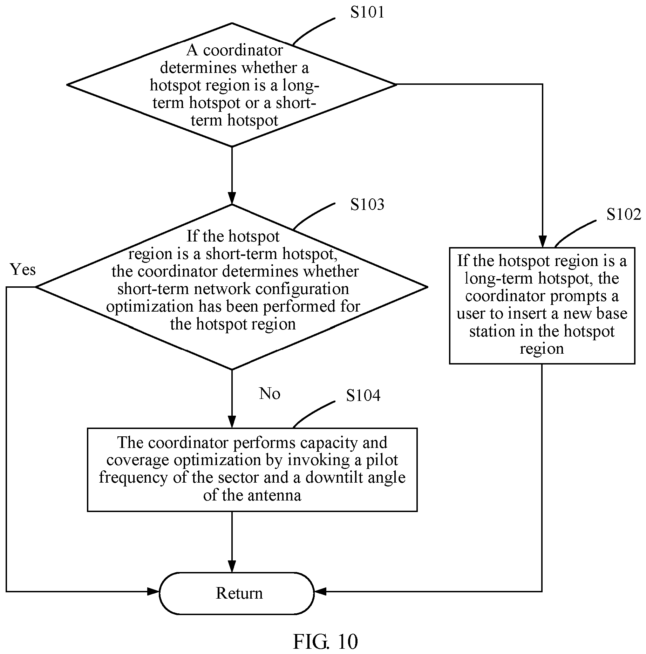

In S902, as shown in FIG. 10, the performing, by the coordinator 102, the first configuration optimization of the network based on the temporal characteristics of the network traffic hotspot region includes:

S101: The coordinator 102 determines whether the network traffic hotspot region is a long-term network traffic hotspot or a short-term network traffic hotspot.

S102: If the network traffic hotspot region is a long-term network traffic hotspot, the coordinator 102 prompts a user to insert a new base station in the network traffic hotspot region.

S103: If the network traffic hotspot region is a short-term network traffic hotspot, the coordinator 102 determines whether short-term network configuration optimization has been performed for the network traffic hotspot region.

S104: The coordinator 102 performs capacity and coverage optimization by invoking a pilot frequency of the sector 107 and a downtilt of an antenna 108 if the short-term network configuration optimization has not been performed for the network traffic hotspot region.

In S101, the long-term network traffic hotspot refers to that the network traffic hotspot region is always detected in a long statistical time period, such as a weekly or monthly statistical time period. The short-term network traffic hotspot refers to that the network traffic hotspot region is detected in a short statistical time period, such as in a minutely or hourly short statistical time period.

In S103, the process returns back if the short-term configuration optimization has been performed for the network traffic hotspot region.

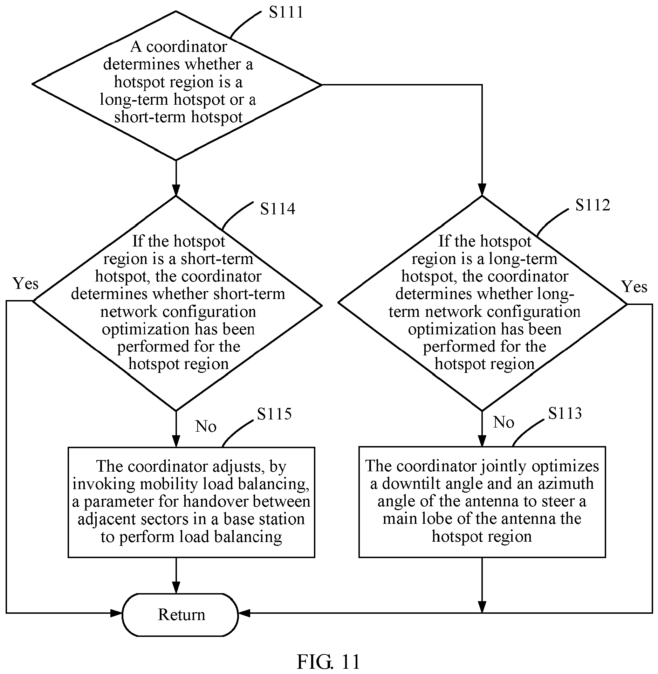

In S904, as shown in FIG. 11, the performing, by the coordinator 102, the second configuration optimization of the network based on the temporal characteristics of the network traffic hotspot region includes:

S111: The coordinator 102 determines whether the network traffic hotspot region is a long-term network traffic hotspot or a short-term network traffic hotspot.

S112: If the network traffic hotspot region is a long-term network traffic hotspot, the coordinator 102 determines whether long-term network configuration optimization has been performed for the network traffic hotspot region.

S113: If the long-term network configuration optimization has not been performed for the network traffic hotspot region, the coordinator 102 jointly optimizes a downtilt of the antenna 108 and an azimuth of the antenna 108 to steer a main lobe of the antenna 108 towards the network traffic hotspot region.

S114: If the network traffic hotspot region is a short-term network traffic hotspot, the coordinator 102 determines whether short-term network configuration optimization has been performed for the network traffic hotspot region.

S115: If the short-term network configuration optimization has not been performed for the network traffic hotspot region, the coordinator 102 adjusts, by invoking mobility load balancing, a parameter for handover between neighboring sectors 107 of the base station 101 to perform load balancing.

In S112, the process returns back if the long-term network configuration optimization has been performed for the network traffic hotspot region.

In S114, the process returns back if the short-term network configuration optimization has been performed for the network traffic hotspot region.

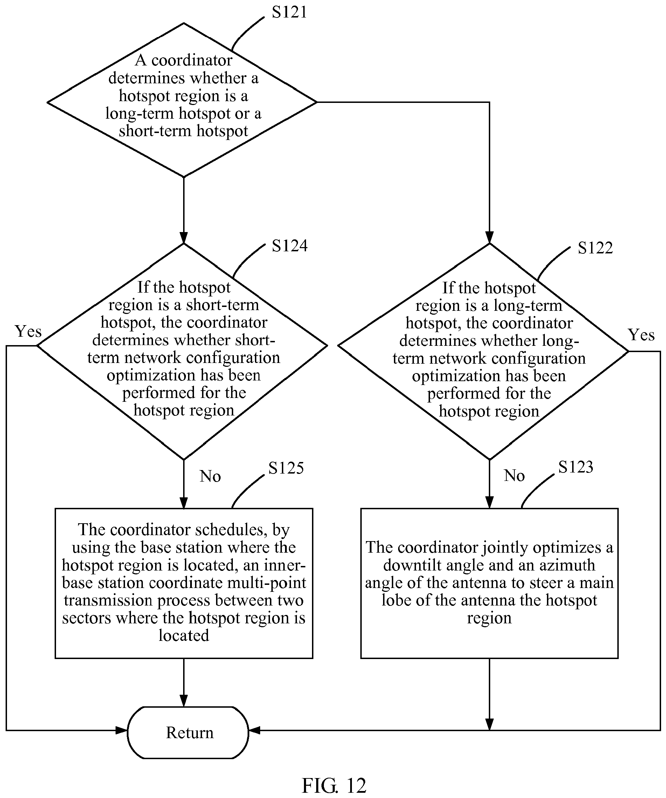

In S906, as shown in FIG. 12, the performing, by the coordinator 102, the third configuration optimization of the network based on the temporal characteristics of the network traffic hotspot region includes:

S121: The coordinator 102 determines whether the network traffic hotspot region is a long-term network traffic hotspot or a short-term network traffic hotspot.

S122: If the network traffic hotspot region is a long-term network traffic hotspot, the coordinator 102 determines whether long-term network configuration optimization has been performed for the network traffic hotspot region.

S123: The coordinator 102 jointly optimizes a downtilt of the antenna 108 and an azimuth of the antenna 108 to steer a main lobe of the antenna 108 towards the network traffic hotspot region if the long-term network configuration optimization has not been performed on the network.

S124: If the network traffic hotspot region is a short-term network traffic hotspot, the coordinator 102 determines whether short-term network configuration optimization has been performed for the network traffic hotspot region.

S125: If the short-term network configuration optimization has not been performed for the network traffic hotspot region, the coordinator 102 schedules, by using the base station where the network traffic hotspot region is located, an inner-base station coordinate multi-point transmission processing between two sectors 107 where the network traffic hotspot region is located.

In S122, the process returns back if the long-term network configuration optimization has been performed for the network traffic hotspot region.

In S124, the process returns back if the short-term network configuration optimization has been performed for the network traffic hotspot region.

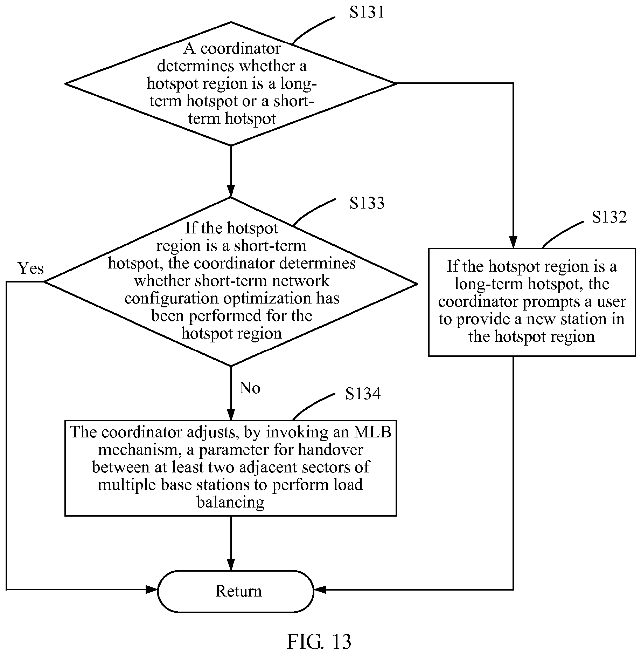

In S908, as shown in FIG. 13, the performing, by the coordinator 102, the fourth configuration optimization of the network based on the temporal characteristics of the network traffic hotspot region includes:

S131: The coordinator 102 determines whether the network traffic hotspot region is a long-term network traffic hotspot or a short-term network traffic hotspot.

S132: If the network traffic hotspot region is a long-term network traffic hotspot, the coordinator 102 prompts a user to provide a new station in the network traffic hotspot region.

S133: If the network traffic hotspot region is a short-term network traffic hotspot, the coordinator 102 determines whether short-term network configuration optimization has been performed for the network traffic hotspot region.

S134: If the short-term network configuration optimization has not been performed for the network traffic hotspot region, the coordinator 102 adjusts, by invoking an MLB case, a parameter for handover between at least two neighboring sectors of multiple base stations 101 to perform load balancing.

In S133, the process returns back if the short-term network configuration optimization has been performed for the network traffic hotspot region.

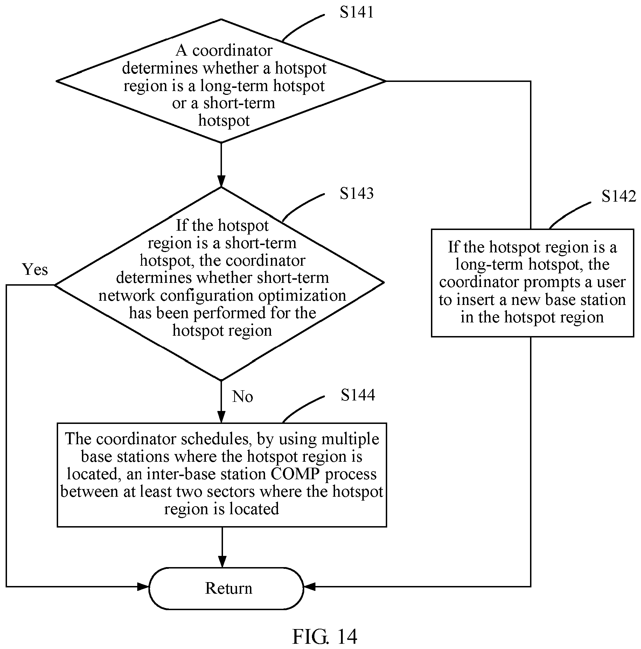

In S910, as shown in FIG. 14, the performing, by the coordinator 102, the fifth configuration optimization of the network based on the temporal characteristics of the network traffic hotspot region includes:

S141: The coordinator 102 determines whether the network traffic hotspot region is a long-term network traffic hotspot or a short-term network traffic hotspot.

S142: If the network traffic hotspot region is a long-term network traffic hotspot, the coordinator 102 prompts a user to insert a new base station in the network traffic hotspot region.

S143: If the network traffic hotspot region is a short-term network traffic hotspot, the coordinator 102 determines whether short-term network configuration optimization has been performed for the network traffic hotspot region.

S144: If the short-term network configuration optimization has not been performed for the network traffic hotspot region, the coordinator 102 schedules, by using multiple base stations where the network traffic hotspot region is located, an inter-base station COMP processing between at least two sectors where the network traffic hotspot region is located.

In S143, the process returns back if the short-term network configuration optimization has been performed for the network traffic hotspot region.

The present invention differs from the prior art in that a network traffic hotspot of each sector of the base station is obtained based on network traffic of the sector; if there is a network traffic hotspot in the sector, a traffic volume and a location of a virtual network traffic hotspot are obtained based on locations of all network traffic hotspots of the sector, and are reported to a coordinator; the coordinator performs network configuration optimization based on the traffic volume and the location of the virtual network traffic hotspot. This solution can be applied to various types of sector overload, thereby avoiding overload of the sector and eliminating a network traffic hotspot.

The foregoing descriptions are merely embodiments of the present invention, and the protection scope of the present invention is not limited thereto, but it is limited by the appended claims.

## Claims

1. A base station (101), wherein the base station (101) comprises a processing unit (103) and a transmitting unit (104), wherein
the processing unit (103) is configured to obtain a network traffic hotspot of each sector (107) of the base station based on a network traffic volume of the sector (107);
wherein the base station (101) is **characterized in that**:

the processing unit is configured to obtain a traffic volume and a location of a virtual network traffic hotspot based on locations of all network traffic hotspots in the sector (107) according to the following relationship, if there is a network traffic hotspot in the sector (107):

$$(x_{sc}, \ y_{sc}) = \frac{\sum_{si=1}^{C_N} T_{si} * (x_{si}, \ y_{si})}{\sum_{si=1}^{C_N} T_{si}}$$

wherein the sector (107) comprises $C_N$ network traffic hotspots, a location of each of the network traffic hotspots is $(x_{si}, y_{si})$, a traffic volume corresponding to each of the network traffic hotspots is $T_{si}$, the location of the virtual network traffic hotspot corresponding to the $C_N$ network traffic hotspots is $(x_{sc}, y_{sc})$, and the traffic volume of the virtual network traffic hotspot is $\sum_{si=1}^{C_N} T_{si}$;

the transmitting unit (104) is configured to report to a coordinator comprised in an apparatus for eliminating a network traffic hotspot, that there is no network traffic hotspot if there is no network traffic hotspot in the sector (107); and report the traffic volume and the location of the virtual network traffic hotspot to the coordinator if there is a network traffic hotspot in the sector (107).

2. A method for eliminating a network traffic hotspot, wherein the method comprises:

obtaining (S701), by a base station (101), a network traffic hotspot of each sector (107) of the base station based on a network traffic volume of the sector (107);

if there is no network traffic hotspot in the sector, reporting (S703), by the base station (101), to a coordinator (102) comprised in an apparatus for eliminating a network traffic hotspot that there is no network traffic hotspot;

wherein the method for eliminating a network traffic hotspot is **characterized in that** if there is a network traffic hotspot in the sector (107), obtaining (S704), by the base station (101), a traffic volume and a location of a virtual network traffic hotspot based on locations of all network traffic hotspots in the sector (107) according to the following relationship:

$$(x_{sc},\ y_{sc}) = \frac{\sum_{si=1}^{C_N} T_{si} * (x_{si},\ y_{si})}{\sum_{si=1}^{C_N} T_{si}},$$

wherein the sector (107) comprises $C_N$ network traffic hotspots, a location of each of the network traffic hotspots is $(x_{si}, y_{si})$, a traffic volume corresponding to each of the network traffic hotspots is $T_{si}$, the location of the virtual network traffic hotspot corresponding to the $C_N$ network traffic hotspots is $(x_{sc}, y_{sc})$, and the traffic volume of the virtual network traffic hotspot is $\sum_{si=1}^{C_N} T_{si}$; and

reporting, by the base station (101), the traffic volume and the location of the virtual network traffic hotspot to the coordinator (102).

**Patentansprüche**

1. Basisstation (101),
wobei die Basisstation (101) eine Verarbeitungseinheit (103) und eine Übertragungseinheit (104) umfasst,
wobei die Verarbeitungseinheit (103) dazu ausgelegt ist, einen Netzwerkverkehr-Hotspot jedes Sektors (107) der Basisstation auf der Basis eines Netzwerkverkehrsvolumens des Sektors (107) zu erhalten;
wobei die Basisstation (101) **dadurch gekennzeichnet ist, dass**:

die Verarbeitungseinheit dazu ausgelegt ist, ein Verkehrsvolumen und eine Position eines virtuellen Netzwerkverkehr-Hotspots auf der Basis der Positionen aller Netzwerkverkehr-Hotspots in dem Sektor (107) gemäß der folgenden Beziehung zu erhalten, falls ein Netzwerkverkehr-Hotspot in dem Sektor (107) vorhanden ist:

$$(x_{sc},\ y_{sc}) = \frac{\sum_{si=1}^{C_N} T_{si} * (x_{si},\ y_{si})}{\sum_{si=1}^{C_N} T_{si}}$$

wobei der Sektor (107) $C_N$ Netzwerkverkehr-Hotspots umfasst, eine Position von jedem der Netzwerkverkehr-Hotspots $(x_{si}, y_{si})$ ist, ein Verkehrsvolumen, das jedem der Netzwerkverkehr-Hotspots entspricht, $T_{si}$ ist, die Position des virtuellen Netzwerkverkehr-Hotspots, der dem $C_N$ Netzwerkverkehr-Hotspot entspricht, $(x_{sc}, y_{sc})$ ist, und das Verkehrsvolumen des virtuellen Netzwerkverkehr-Hotspots $\sum_{si=1}^{C_N} T_{si}$ ist,

die Übertragungseinheit (104) dazu ausgelegt ist, einem Koordinator, der in einer Vorrichtung zum Eliminieren eines Netzwerkverkehr-Hotspots enthalten ist, zu melden, dass kein Netzwerkverkehr-Hotspot vorhanden ist, falls kein Netzwerkverkehr-Hotspot in dem Sektor (107) vorhanden ist;
und das Verkehrsvolumen und die Position des virtuellen Netzwerkverkehr-Hotspots dem Koordinator zu melden, falls ein Netzwerkverkehr-Hotspot in dem Sektor (107) vorhanden ist.

2. Verfahren zum Eliminieren eines Netzwerkverkehr-Hotspots,
wobei das Verfahren Folgendes umfasst:

Erhalten (S701), durch eine Basisstation (101), eines Netzwerkverkehr-Hotspots jedes Sektors (107) der Basisstation auf der Basis eines Netzwerkverkehrsvolumens des Sektors (107);
falls kein Netzwerkverkehr-Hotspot in dem Sektor vorhanden ist, Melden (S703), durch die Basisstation (101), einem Koordinator (102), der in einer Vorrichtung zum Eliminieren eines Netzwerkverkehr-Hotspots enthalten ist, dass kein Netzwerkverkehr-Hotspot vorhanden ist;
wobei das Verfahren zum Eliminieren eines Netzwerkverkehr-Hotspots **dadurch gekennzeichnet ist, dass**,
falls ein Netzwerkverkehr-Hotspot in dem Sektor (107) vorhanden ist, Erhalten (S704), durch die Basisstation (101), eines Verkehrsvolumens und einer Position eines virtuellen Netzwerkverkehr-Hotspots auf der Basis der Positionen aller Netzwerkverkehr-Hotspots in dem Sektor (107) gemäß der folgenden Beziehung:

$$(x_{sc}, y_{sc}) = \frac{\sum_{si=1}^{C_N} T_{si} * (x_{si}, y_{si})}{\sum_{si=1}^{C_N} T_{si}}$$

wobei der Sektor (107) $C_N$ Netzwerkverkehr-Hotspots umfasst, eine Position von jedem der Netzwerkverkehr-Hotspots $(x_{si}, y_{si})$ ist, ein Verkehrsvolumen, das jedem der Netzwerkverkehr-Hotspots entspricht, $T_{si}$ ist, die Position des virtuellen Netzwerkverkehr-Hotspots, der dem $C_N$ Netzwerkverkehr-Hotspot entspricht, $(x_{sc}, y_{sc})$ ist, und das Verkehrsvolumen des virtuellen Netzwerkverkehr-Hotspots $\sum_{si=1}^{C_N} T_{si}$ ist, und

Melden, durch die Basisstation (101), des Verkehrsvolumens und der Position des virtuellen Netzwerkverkehr-Hotspots dem Koordinator (102).

## Revendications

1. Station (101) de base, la station (101) de base comportant une unité (103) de traitement et une unité (104) d'émission,
l'unité (103) de traitement étant configurée pour obtenir un point chaud de trafic de réseau de chaque secteur (107) de la station de base d'après un volume de trafic de réseau du secteur (107) ;
la station (101) de base étant **caractérisée en ce que** :

l'unité de traitement est configurée pour obtenir un volume de trafic et un emplacement d'un point chaud virtuel de trafic de réseau d'après les emplacements de tous les points chauds de trafic de réseau dans le secteur (107) selon la relation suivante, s'il existe un point chaud de trafic de réseau dans le secteur (107) :

$$(x_{sc}, y_{sc}) = \frac{\sum_{si=1}^{C_N} T_{si} * (x_{si}, y_{si})}{\sum_{si=1}^{C_N} T_{si}}$$

le secteur (107) comportant $C_N$ points chauds de trafic de réseau, un emplacement de chacun des points chauds de trafic de réseau étant $(x_{si}, y_{si})$, un volume de trafic qui correspond à chacun des points chauds de trafic de réseau étant $T_{si}$, l'emplacement du point chaud virtuel de trafic de réseau qui correspond aux $C_N$ points chauds de trafic de réseau étant $(x_{sc}, y_{sc})$, et le volume de trafic du point chaud virtuel de trafic de réseau étant $\sum_{si=1}^{C_N} T_{si}$ ;
l'unité (104) d'émission étant configurée pour rendre compte à un coordinateur compris dans un appareil servant à éliminer un point chaud de trafic de réseau, du fait qu'il n'existe aucun point chaud de trafic de réseau s'il n'existe aucun point chaud de trafic de réseau dans le secteur (107) ; et rendre compte du volume de trafic et de l'emplacement du point chaud virtuel de trafic de réseau au coordinateur s'il existe un point chaud de trafic de réseau dans le secteur (107).

2. Procédé d'élimination d'un point chaud de trafic de réseau, le procédé comportant :

l'obtention (S701), par une station (101) de base, d'un point chaud de trafic de réseau de chaque secteur (107) de la station de base d'après un volume de trafic de réseau du secteur (107) ;
s'il n'existe aucun point chaud de trafic de réseau dans le secteur, le signalement (S703), par la station (101) de base, à un coordinateur (102) compris dans un appareil servant à éliminer un point chaud de trafic de réseau, du fait qu'il n'existe aucun point chaud de trafic de réseau ;
le procédé d'élimination d'un point chaud de trafic de réseau étant caractérisé, s'il existe un point chaud de trafic de réseau dans le secteur (107), par l'obtention (S704), par la station (101) de base, d'un volume de trafic et d'un emplacement d'un point chaud virtuel de trafic de réseau d'après les emplacements de tous les points chauds de trafic de réseau dans le secteur (107) selon la relation suivante :

$$(x_{sc}, y_{sc}) = \frac{\sum_{si=1}^{C_N} T_{si} * (x_{si}, y_{si})}{\sum_{si=1}^{C_N} T_{si}}$$

le secteur (107) comportant $C_N$ points chauds de trafic de réseau, un emplacement de chacun des points chauds de trafic de réseau étant ($x_{si}$, $y_{si}$), un volume de trafic qui correspond à chacun des points chauds de trafic de réseau étant $T_{si}$, l'emplacement du point chaud virtuel de trafic de réseau qui correspond aux $C_N$ points chauds de trafic de réseau étant ($x_{sc}$, $y_{sc}$), et le volume de trafic du point chaud virtuel de trafic de réseau étant $\sum_{si=1}^{C_N} T_{si}$ et

le signalement, par la station (101) de base, du volume de trafic et de l'emplacement du point chaud virtuel de trafic de réseau au coordinateur (102).

10

FIG. 1

FIG. 2

FIG. 3

FIG. 4

50

501                                    502

504                                    505

| transmitter | | receiver |

503                                    506

| processor | | processor |

FIG. 5

501

507

120°

FIG. 6

S701

A base station obtains or predicts a hotspot of each sector based on a network traffic volume of the sector

S702

The base station determines whether there is a hotspot in the sector

No

Yes S704

The base station obtains a traffic volume and a location of a virtual hotspot based on locations of all hotspots in the sector and reports the traffic volume and the location of the virtual hotspot to the coordinator

S703

The base station reports to a coordinator that there is no hotspot

S705

The coordinator performs network configuration optimization based on the traffic volume, the location and temporal characteristics of the virtual hotspot, to avoid overload of the sector

FIG. 7

S801

A coordinator determines hotspot regions of a network based on the traffic volume and the location of the virtual hotspot, and sorts the hotspot regions

S802

The coordinator traverses the hotspot regions and determines whether traversing of the hotspot regions has been completed

Yes

No

S803

The coordinator performs network configuration optimization based on the locations of the hotspot regions and temporal characteristics of the hotspot regions

S804

The coordinator acquires a KPI of the network after the optimization and a KPI of the network before the optimization, and compares the KPI of the network after the optimization with the KPI of the network before the optimization

S805

If the KPI of the network after the optimization is worse than the KPI of the network before the optimization, the coordinator sets a parameter of the network after the optimization back to a parameter of the network before the optimization

If the KPI of the network after the optimization is the same as or better than the KPI of the network before the optimization

Return

FIG. 8

S901

A coordinator
determines whether a
hotspot region is located
inside a sector

Yes →

S902

The coordinator performs first
configuration optimization of the
network based on the temporal
characteristics of the hotspot region

No ↓

S903

The coordinator
determines whether the
hotspot region is located
at an edge of an adjacent
sector

Yes →

S904

The coordinator performs second
configuration optimization of the
network based on the temporal
characteristics of the hotspot region

No ↓

S905

The coordinator
determines whether the
hotspot region is located
at an intersection area
of adjacent sectors

Yes →

S906

The coordinator performs third
configuration optimization of the
network based on the temporal
characteristics of the hotspot region

No ↓

S907

The coordinator
determines whether the
hotspot region is located
at an edge of coverage
of the sector

Yes →

S908

The coordinator performs fourth
configuration optimization of the
network based on the temporal
characteristics of the hotspot region

No ↓

S909

The coordinator
determines whether the
hotspot region is located
at an intersection area
of coverage of the
sectors

Yes →

S910

The coordinator performs fifth
configuration optimization of the
network based on the temporal
characteristics of the hotspot region

FIG. 9

S101

A coordinator
determines whether a
hotspot region is a long-
term hotspot or a short-
term hotspot

S103

If the hotspot
region is a short-term hotspot,
the coordinator determines whether
short-term network configuration
optimization has been performed for
the hotspot region

Yes

No

S104

S102

If the hotspot region is a
long-term hotspot, the
coordinator prompts a
user to insert a new base
station in the hotspot
region

The coordinator performs capacity and
coverage optimization by invoking a pilot
frequency of the sector and a downtilt angle
of the antenna

Return

FIG. 10

S111

A coordinator
determines whether a
hotspot region is a
long-term hotspot or a
short-term hotspot

S114

If the hotspot
region is a short-term
hotspot, the coordinator
determines whether short-term
network configuration
optimization has been
performed for the
hotspot region

Yes

S112

If the hotspot
region is a long-term
hotspot, the coordinator
determines whether long-
term network configuration
optimization has been
performed for the
hotspot region

Yes

No    S115

The coordinator adjusts, by
invoking mobility load balancing,
a parameter for handover between
adjacent sectors in a base station
to perform load balancing

No    S113

The coordinator jointly optimizes
a downtilt angle and an azimuth
angle of the antenna to steer a
main lobe of the antenna the
hotspot region

Return

FIG. 11

S121

A coordinator
determines whether a
hotspot region is a
long-term hotspot or a
short-term hotspot

S124

If the hotspot
region is a short-term
hotspot, the coordinator
determines whether short-
term network configuration
optimization has been
performed for the
hotspot region

Yes

No

S125

The coordinator schedules, by
using the base station where the
hotspot region is located, an inner-
base station coordinate multi-point
transmission process between two
sectors where the hotspot region is
located

S122

If the hotspot
region is a long-term
hotspot, the coordinator
determines whether long-
term network configuration
optimization has been
performed for the
hotspot region

Yes

No

S123

The coordinator jointly optimizes a
downtilt angle and an azimuth
angle of the antenna to steer a main
lobe of the antenna the hotspot
region

Return

FIG. 12

S131

A coordinator
determines whether a
hotspot region is a long-
term hotspot or a short-
term hotspot

S133

If the hotspot
region is a short-term
hotspot, the coordinator determines
whether short-term network
configuration optimization has
been performed for the
hotspot region

Yes

No

S132

If the hotspot region is a
long-term hotspot, the
coordinator prompts a user
to provide a new station in
the hotspot region

S134

The coordinator adjusts, by invoking an MLB
mechanism, a parameter for handover
between at least two adjacent sectors of
multiple base stations to perform load
balancing

Return

FIG. 13

S141

A coordinator
determines whether a hotspot
region is a long-term hotspot
or a short-term
hotspot

S143

S142

If the hotspot
region is a short-term
hotspot, the coordinator
determines whether short-term
network configuration optimization
has been performed for the
hotspot region

If the hotspot region is a
long-term hotspot, the
coordinator prompts a user
to insert a new base station
in the hotspot region

Yes

No

S144

The coordinator schedules, by using multiple
base stations where the hotspot region is
located, an inter-base station COMP process
between at least two sectors where the hotspot
region is located

Return

FIG. 14

**EP 3 068 162 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110294499 A1
- WO 2013113266 A1